# EUROPÄISCHE PATENTSCHRIFT

(11) **EP 0 431 383 B1**
(45) Veröffentlichungstag und Bekanntmachung des Hinweises auf die Patenterteilung: **13.01.1993**
(21) Anmeldenummer: 90122086.3
(22) Anmeldetag: 19.11.1990
(51) Int. Cl.: B60T 8/36

(54) **Gleitschutzventil für druckluftgebremste Fahrzeuge**
Anti-skid valve for vehicles braked by compressed air
Soupape antidérapante pour véhicules freinant à air comprimé

(30) Priorität: 05.12.1989 DE 3940232
(43) Veröffentlichungstag der Anmeldung: 12.06.1991
(73) Patentinhaber: KNORR-BREMSE AG, 80710 München (DE)
(72) Erfinder: Krause, Georg, W-8000 München 21 (DE)

(56) Entgegenhaltungen:
- EP-A- 0 304 610
- EP-B- 0 147 585
- DE-A- 2 419 135
- DE-A- 2 500 219

## Beschreibung

Die Erfindung betrifft ein Gleitschutzventil für druckluftgebremste Fahrzeuge, mit einem in eine Verbindung von einer Bremsdruckquelle zu wenigstens einem Bremszylinder eingeordneten Absperrventil, ggfs. Membranabsperrventil, das von einem Kolben- oder Membranglied schaltbar ist, welches in Ventilschließrichtung wirkend vom durch ein Vorsteuerventil überwacht zuführbaren Druck der Bremsdruckquelle und der Kraft einer Feder und andererseits, in Ventilöffnungsrichtung wirkend, ständig vom Druck der Bremsdruckquelle beaufschlagt ist, und mit einem das Absperrventil überbrückenden, eine Drosselstelle aufweisenden Bypasskanal.

Ein derartiges Gleitschutzventil ist aus der EP-B-0 147 585 bekannt. Der Bypasskanal stellt hierbei eine zwar gedrosselte, aber doch ständig offene Verbindung von der Bremsdruckquelle zum Bremszylinder bzw. umgekehrt dar, er dient dem Zweck, beim Lösen trotz Schließens des Absperrventils unter seiner Federbelastung bei noch vorhandenem, geringem Bremsdruck im Bremszylinder dessen vollständige Entlüftung - durch den Bypasskanal und die Atmos phärendruck einsteuernde Bremsdruckquelle - sicherzustellen. Dieses bekannte Gleitschutzventil ist jedoch mit dem Mangel behaftet, daß während stärkeren Bremsungen mit hohen, von der Bremsdruckquelle eingesteuerten Bremsdrücken, durch das Gleitschutzventil jedoch abgesenkter Druckbeaufschlagung des Bremszylinders während Zeitspannungen, während welchen das Absperrventil geschlossen ist und somit die Druckbeaufschlagung des Bremszylinders konstant gehalten werden sollte, durch den gedrosselten Bypasskanal Druckluft von der Bremsdruckquelle zum Bremszylinder strömt und den dort herrschenden Druck allmählich steigert; dies stellt eine Störung der Gleitschutz-Regelvorgänge dar und kann zu einen erneuten Ansprechen des Gleitschutzventils mit erneuter und weiterer Druckabsenkung für den Bremszylinder und damit zu einer Verlängerung des Bremsweges führen, das erneute Ansprechen des Gleitschutzventils bedeutet außerdem einen unnützen Verbrauch von Druckluftenergie.

Bei einer anderen, aus der erwähnten EP-B-0 147 585 bekannt gewordenen Ausführungsform des Gleitschutzventils entfällt der Bypasskanal , doch steht der Bremszylinder durch eine ggfs. durch ein Membranentlüftungsventil überwachte Drosselbohrung mit der Atmosphäre in Verbindung. Diese Ausführungsform ist mit dem Mangel behaftet, daß bei fehlendem Membranentlüftungsventil der Bremszylinder während Bremsungen ständig, bei vorhandenem Membranentlüftungsventil während Einbremsvorgängen und ständig während Bremsungen mit niedrigen Bremsdrücken, also noch geöffnetem Membranentlüftungsventil, in die Atmosphäre entlüftet wird. Diese Entlüftungen stellen einen unnötigen Verbrauch von Druckluftenergie dar, sie stören außerdem die Bremsregelungsvorgänge, zum Aufrechterhalten eines betimmten Bremsdruckes ist eine ständige Nachspeisung von Druckluft durch die Druckluftquelle erforderlich.

Es ist Aufgabe der Erfindung, ein Gleitschutzventil der eingangs genannten Art derart auszugestalten, daß es einerseits im Lösezustand ein sicheres und vollständiges Entlüften des Bremszylinders gewährleistet, andererseits aber keinen unnützen Verbrauch von Druckluftenergie bewirkt und keine negativen Auswirkungen auf die Bremsdrucksteuerung und die Ausregelung von Gleitvorgängen, insbesondere die Ansprechhäufigkeit des Gleitschutzventils zeigt. Der Bauwaufwand des Gleitschutzventils soll dabei gering gehalten werden.

Diese Aufgabe wird nach der Erfindung dadurch gelöste, daß in den Bypasskanal eine Einwegeventil mit einem festen Ventilsitz und einem auf diesen dichtend aufsetzbaren und diesem in Strömungsrichtung zur Bremsdruckquelle nachgeordneten, beweglichen Ventilschließglied eingeordnet ist, wobei das Ventilschließglied die Drosselstelle bildend am Gehäuse des Gleitschutzventils geführt und bei Druckgleichheit zu seinen beiden Seiten von einer ständig auf es wirkenden Kraft von dem Ventilsitz abgehoben ist.

Durch diese Ausbildung wird erreicht, daß während Lösevorgängen jeglicher Restdruck aus dem Bremszylinder durch den Bypasskanal und das geöffnete Einwegeventil zur Bremsdruckquelle und von dort zur Atmosphäre abführbar ist, daß jedoch bei geschlossenem Absperrventil bei Auftreten von Strömungsvorgängen von der Bremsdruckquelle zum Bremszylinder das Einwegeventil schließt und somit diesen Strömungsvorgang sofort wieder unterbricht, ein ungewollter Druckanstieg im Bremszylinder somit ausgeschlossen ist. Auch können bei diesem Gleitschutzventil keinerlei ungewollte oder störende Entlüftungen des Bremszylinders auftreten.

Nach der weiteren Erfindung vorteilhafte Ausbildungsmöglichkeiten eines derartigen Gleitschutzventils sind durch die Merkmale der Unteransprüche aufgezeigt.

In den Zeichnungen sind Ausführungsbeispiele für nach der Erfindung ausgebildete Gleitschutzventile dargestellt, und zwar zeigt
Fig.1 ein erstes Ausführungsbeispiel,
Fig.1A das Einwegeventil als Einzelheit aus Fig .1 in vrgrößertem Maßstab,
Fig.2 in einer vergrößerten Ausschnittdarstellung eine geänderte Ausführungsform des Einwegeventils und
Fig.3 eine weitere Ausführungsform des Gleitschutzventils.

Die Fig .1 zeigt ein Gleitschutzventil 1 mit einem Gehäuse 2, in welchem eine Membrane 3 gehaltert ist, die auf einen gehäusefesten Ventilsitz 4 aufsetzbar ist und mit diesen zusammen ein Membranabsperrventil 3,4 bildet. Die Membrane 3 ist auf einen den Ventilsitz 4 umgebenden Ringabschnitt vom Druck in einer Kammer 5 in Öffnungsrichtung des Membranabsperrventils 3,4 wirkend beaufschlagt, die Kammer 5 steht mit einem als Bremsdruckquelle dienenden Bremsventil 6 in Verbindung. Die Kammer 5 steht über eine Zweigleitung 7 mit eingeordnetem, als Magnetventil ausgebildeten Vorsteuerventil 8 mit einer Kammer 9 in Verbindung, welche von der Membrane 3 begrenzt ist; die Kammern 5 und 9 befinden sich auf gegenüberliegenden Seiten der Membrane 3. Das Vorsteuerventil 8 hält die Kammer 9 normalerweise entlüftet, nur während Gleitvorgängen öffnet das Vorsteuerventil 8 und beaufschlagt die Kammer 9 mit dem vom Bremsventil 6 ausgesteuerten Druck. Der Ventilsitz 4 umschließt eine Kammer 10, an welche der Bremszylinder 11 angeschlossen ist. Die Kammer 10 ist in Richtung zur Kammer 5 von einer Wandung 12 begrenzt. Eine Bohrung 13 durchsetzt die Wandung 12, die Bohrung 13 ist zur Kammer 10 offen. In der Kammer 9 befindet sich eine Feder 14, welche sich einerseits am Gehäuse 2 abstützt und andererseits an der Membrane 3 anliegt und mit ihrer Vorspannung das Membranabsperrventil 3,4 in Schließrichtung belastet.

Insoweit entspricht der Aufbau des Gleitschutzventils demjenigen nach der erwähnten EP-B-0 147 585 und braucht daher auch in seiner Funktion nicht weiter beschrieben zu werden.

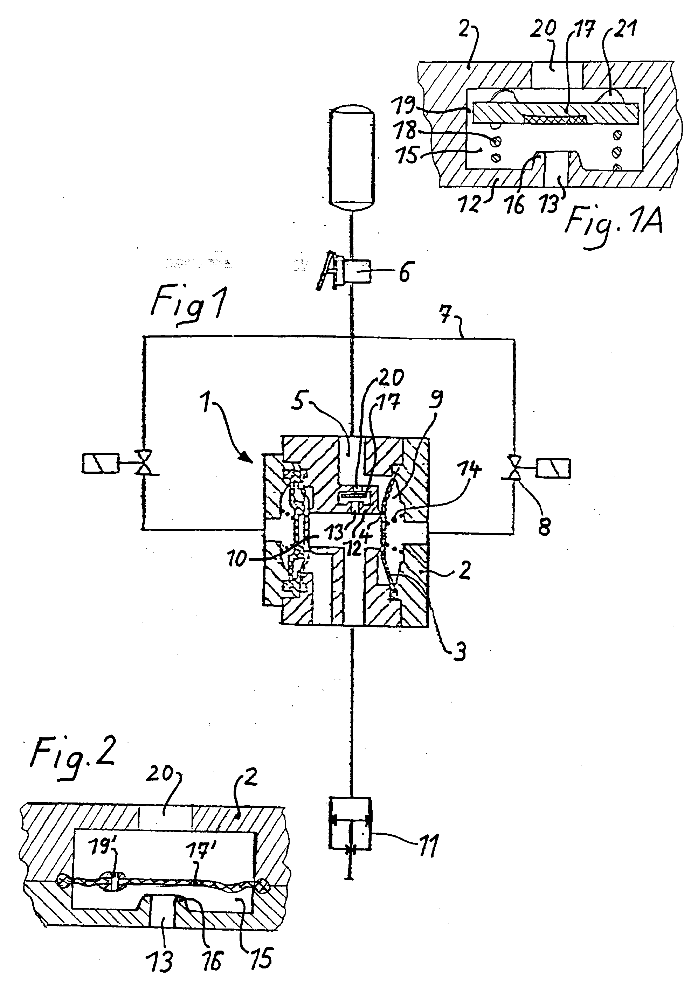

Abgewandt zur Kammer 10 begrenzt die Wandung 12 wie aus Fig.1A ersichtlich eine Kammer 15, in welcher die Bohrung 13 innerhalb eines sie umgebenden Ventilsitzes 16 endet. In der Kammer 15 befindet sich ein Ventilschließglied 17, das von einer nur in Fig.1A dargestellten, schwachen Feder 18 in Abheberichtung vom Ventilsitz 16 belastet ist. Das Ventilschließglied 17 ist unter Bilden eines engen Ringspaltes an der die Kammer 15 seitlich begrenzenden Wandung geführt; der Ringspalt stellt eine das Ventilschließglied 17 überbrückende Drosselstelle 19 dar. Auf der dem Ventilsitz 16 abgewandten Seite steht die Kammer 15 über eine Öffnung 20 mit der Kammer 5 in Verbindung; die Mündung der Öffnung 20 bzw. das Ventilschließglied 17 sind beispielsweise durch Noppen oder Nuten 21 derart ausgestaltet, daß das Ventilschließglied 17 sich nicht dichtend auf die Öffnung 20 auflegen kann. Der Rand der Öffnung 20 begrenzt den Abhebehub des Ventilschließgliedes 17 vom Ventilsitz 16; dieser Rand kann somit auch durch einen Sicherungsring 22 gebildet sein. Bei herausgenommenem Si cherungsring ist das Ventilschließglied 17 durch die Kammer 5 in die Kammer 15 einsetzbar.

Der Ventilsitz 16 bildet zusammen mit dem Ventilschließglied 17 ein Einwegeventil 16,17, welches in den aus der Bohrung 13, der Kammer 15 und der Öffnung 20 gebildeten Bypasskanal 13,15,20 eingeordnet ist und welches bei Auftreten eines Druckgefällses an der Drosselstelle 19 in Richtung von der Kammer 5 zur Kammer 10 sich schließt und bei bestehendem, derartigen Druckgefälle geschlossen gehalten wird; bei Druckgleichheit zu beiden Seiten des Ventilschließgliedes 17 und bei den Druck in der Kammer 5 übersteigendem Druck in der Kammer 10 ist das Einwegeventil 16,17 geöffnet.

Aus dieser Funktionsweise des Einwegeventils 16,17 ergibt sich, daß während Einbremsvorgängen, während welchen das Bremsventil 6 Druckluft durch das geöffnete Membranabsperrventil 3,4 in den Bremszylinder 11 einspeist, das Einwegeventil 16,17 je nach auftretenden Strömungsverhältnissen bzw. Strömungswiderstand am geöffnetem Membranabsperrventil 3,4 geöffnet oder geschlossen sein kann; dies ist jedoch ohne praktische Auswirkung auf den Drucklufteinspeisevorgang in den Bremszylinder 11 . Während Bremsabschlußstellungen ohne Gleitvorgänge, während welchen das Bremsventil 6 keine Druckänderungen für den Bremszylinder 11 aussteuert, ist das Einwegeventil 16,17 bei Druckgleichheit zu beiden Seiten seines Ventilschließgliedes 17 unter der Wirkung der Feder 18 geöffnet. Spricht das Gleitschutzventil 1 während Einbremsvorgängen oder Bremsabschlußstellungen zum Vermeiden oder Beseitigen von Gleitvorgängen an, so wird sein Membranabsperrventil 3,4 zum Unterbinden einer Druckluftnachspeisung vom Bremsventil 6 zum Bremszylinder 11 geschlossen, während gleichzeitig oder nachfolgend durch Öffnen eines Auslaßventils der im Bremszylinder 11 herrschende Druck abgesenkt werden kann. Sobald bei geschlossenem Membranäbsperrventil 3,4 im Bremszylinder 11 eine Druckminderung gegenüber dem vom Bremsventil 6 ausgesteuerten Druck auftritt, bewirkt die Drosselstelle 19 eine Druckdifferenz zu beiden Seiten des Ventilschließgliedes 17, welche letzteres entgegen der Kraft der schwachen Feder 18 auf den Ventilsitz 16 aufsetzt, das Einwegeventil 16,17 somit schließt und eine Druckluftnachspeisung vom Bremsventil 6 durch die Bohrung 13 zum Bremszylinder 11 unterbindet.

Beim nachfolgenden Lösen wird der Bremszylinder 11 durch das geöffnete bzw. sich wieder öffnende Membranabsperrventil 3,4 und das Bremsventil 6 zur Atmosphäre entlüftet, bis bei einem bestimmten, niedrigen Restdruck das Membranabsperrventil 3,4 unter der Kraft der Feder 14 schließt. Unter der Kraft der Feder 18 sowie der in der Kammer 10 gegenüber der Kammer 5 überwiegenden Druckbeaufschlagung ist das Einwegeventil 16,17 jedoch jedenfalls geöffnet und der verbliebene Restdruck entweicht aus dem Bremszylinder 11 durch die Bohrung 13 und das geöffnete Einwegeventil 16,17 sowie das Bremsventil 6 zur Atmosphäre, es ergibt sich also eine vollständige Entleerung des Bremszylinders 11. Diese vollständige Entleerung des Bremszylinders 11 ist zum vollständigen Losen der Bremsen und auch zur einwandfreien Funktion eines ggfs. in dem Bremszylinder 11 eingebauten, üblichen Gestängestellers erforderlich.

Falls das Gleitschutzventil 1 in in der Zeichnung nach Fig.1 um 180° gedrehter Lage, mit unten liegender Kammer 5, im Fahrzeug montiert wird, so wirkt die Schwerkraft auf das Ventilschließglied 17 in Abfallrichtung vom Ventilsitz 16 ein. Bei dieser Einbaulage kann die schwache Feder 18 entfallen, das Eigengewicht des Ventil schließgliedes 17 stellt hierbei eine ständig auf es in Abfallrichtung vom Ventilsitz 16 wirkende Kraft dar.

In Abänderung zur Ausführung nach Fig .1 kann gemäß Darstellung in Fig.2 das Ventilschließglied 17′ als Membrane ausgebildet sein, welche durch ihre Eigenspannung in Abheberichtung vom Ventilsitz 16 belastetist. Außerhalb des auf den Ventilsitz 16 aufsetzbaren und von diesem umschlossenen Flächenbereiches ist das Ventilschließglied 17′ von einer die Drosselstelle 19′ bildenden, kleinquerschnittigen Durchbrechung durchbrochen. Der weitere Aufbau und auch die Funktion des Gleitschutzventils entsprechen demjenigen nach Fig.1 und brauchen daher nicht weiter beschrieben zu werden.

Selbstverständlich ist es auch möglich, beim Gleitschutzventil 1 nach Fig .1 bzw. 1a das Ventilschließglied 17 zumindest annähernd luftdicht an der Wandung der Kammer 15 zu fuhren und mit einer der Drosselstelle 19′ nach Fig. 2 entsprechenden Drosselstelle zu versehen.

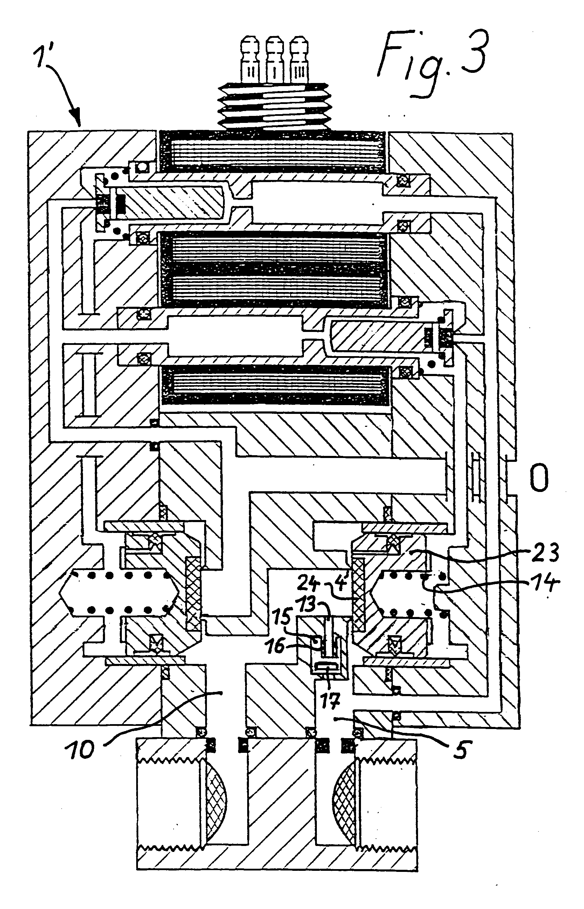

Die Fig.3 zeigt ein Gleitschutzventil 1′, welches in seinem Aufbau im wesentlichen demjenigen nach Fig. 2 der erwähnten EP-B-0 147 585 entspricht. Lediglich das Absperrventil ist nicht als Membranabsperrventil, sondern vermittels eines Kolbens 23 schaltbar ausgebildet, der Kolben 23 trägt eine auf den Ventilsitz 4 aufsetzbare Dichtplatte 24. In Schließrichtung des Absperrventils ist der Kolben 23 von der Feder 14 belastet. Das aus dem Ventilsitz 16 und dem Ventilschließglied 17 gebildete Einwegeventil 16,17 ist derart angeordnet, daß bei der Fig.3 entsprechender, aufrechter Montage des Gleitschutzventil 1 das Ventilschließglied 17 sich unterhalb des Ventilsitzes 16 befindet und somit von seinem Eigengewicht in Abfallrichtung vom Ventilsitz 16 belastet ist; es kann somit eine das Ventilschließglied 17 vom Ventilsitz 16 abspreizende Feder entfallen. Im übrigen entspricht die Funktion des Gleitschutzventils 1′ mit dem Einwegeventil 16,17 vollständig der Beschreibung zu Fig .1.

### Kurzfassung:

Das Gleitschutzventil (1) für druckluftgebremste Fahrzeuge weist ein als Einlaßventil zwischen einem Bremsventil (6) und einem Bremszylinder (11) dienendes Absperrventil (3,4) auf, welches in Schließrichtung von einer Feder (14) belastetist. Um während Lösevorgängen nach durch die Feder (14) bewirktem Schließen des Absperrventils (3,4) eine sichere Restdruckentlüftung des Bremszylinders (11) zu erreichen, ist das Absperrventil (3,4) von einem Bypasskanal (13,15,20) überbrückt, in welchen ein in Strömungsrichtung zum Bremsventil (6) öffnendes Einwegeventil (16,17) eingeordnet ist. Das Einwegeventil (16,17) ist nur bei die Druckbeaufschlagung des Bremszylinders (11) übersteigender Druckaussteuerung seitens des Bremsventils (6) geschlossen, bei Druckgleichheit zu seinen beiden Seiten und umgekehrter Druckdifferenz ist es geöffnet. Zu seiner Schaltsteuerung ist das Ventilschließglied (17) des Einwegeventils (16,17) lediglich von einer Drosselstelle (19) überbrückt im Ventilgehäuse (2) beweglich geführt.

Vermittels des Einwegeventils (16,17) wird eine vollständige Entleerung des Bremszylinders (11) im Lösezustand erreicht, während es bei Druckabsenkungen bewirkenden Gleitschutzregelvorgängen eine Druckluftnachspeisung vom Bremsventil (6) zum Bremszylinder (11) ausschließt.

## Patentansprüche

1. Gleitschutzventil für druckluftgebremste Fahrzeuge, mit einem in eine Verbindung von einer Bremsdruckquelle (Bremsventil 6) zu wenigstens einem Bremszylinder (11) eingeordneten Absperrventil (4,24), ggfs. Membranabsperrventil (3,4), das von einem Kolben- oder Membranglied (23 oder 3) schaltbar ist, welches in Ventilschließrichtung wirkend vom durch ein Vorsteuerventil (8) überwacht zuführbaren Druck der Bremsdruckquelle (6) und der Kraft einer Feder (14) und andererseits, in Ventilöffnungsrichtung wirkend, ständig von Druck der Bremsdruckquelle (6) beaufschlagt ist, und mit einem das Absperrventil (3,4 bzw. 4,24) überbrückenden, eine Drosselstelle (19,19′) aufweisenden Bypasskanal (13,15,20), dadurch gekennzeichnet, daß in den Bypasskanal (13,15,20) ein Einwegeventil (16,17 bzw. 17′) mit einem festen Ventilsitz (16) und einem auf diesen dichtend aufsetzbaren und diesem in Strömungsrichtung zur Bremsdruckquelle (6) nachgeordneten, beweglichen Ventilschließglied (17,17′) eingeordnet ist, wobei das Ventilschließglied (17,17′) die Drosselstelle (19 bzw. 19′) bildend am Gehäuse (2) des Gleitschutzventils (1) geführt und bei Druckgleichheit zu seinen beiden Seiten von einer ständig auf es wirkenden Kraft von dem Ventilsitz (16) abgehoben ist.

2. Gleitschutzventil nach Anspruch 1 , dadurch gekennzeichnet, daß das Ventilschließglied (17) unter Bilden eines die Drosselstelle (19) darstellenden Ringspaltes am Gehäuse (2) geführt ist.

3. Gleitschutzventil nach Anspruch 1, dadurch gekennzeichnet, daß das Ventilschließglied (17′) zumindest annähernd luftdicht am Gehäuse (2) geführt bzw. beweglich gehaltert ist und außerhalb seines vom Ventilsitz abdeckbaren Flächenbereiches eine die Drosselstelle (19′) bildende Durchbrechung aufweist.

4. Gleitschutzventil nach Anspruch 1, 2 oder 3, dadurch gekennzeichnet, daß das Einwegeventil (16,17) mit vertikaler Achsrichtung und oberhalb des Ventilschließgliedes (17) befindlichem Ventilsitz (16) angeordnet ist, derart, daß das Ventilschließglied (17) unter seinem die ständig wirkende Kraft darstellenden Eigengewicht von dem Ventilsitz (16) abfallen kann.

5. Gleitschutzventil nach einem der Ansprüche 1, 2 oder 3, dadurch gekennzeichnet, daß das Ventilschließglied (17) von einer Feder (18) in Abheberichtung vom Ventilsitz (16) belastet ist.

6. Gleitschutzventil nach Anspruch 3, dadurch gekennzeichnet, daß das Ventilschließglied (17′) eine sich unter ihrer Eigenspannung vom Ventilsitz (16) abhebende, am Gehäuse (2) gehalterte Membrane ist.

## Claims

1. Anti-skid valve for vehicles braked by compressed air, having a shutoff valve (4,24), perhaps a diaphragm shutoff valve (3,4), arranged in a connection of a brake-pressure source (brake valve 6) to at least one brake cylinder (11), which can be actuated by a piston element or diaphragm element (23 or 3), which is loaded by the pressure of the brake-pressure source (6) and the force of a spring (14), acting in the closing direction of the valve, which pressure can be supplied by a precontrol valve (8) in a monitored manner, and on the other hand, acting in the opening direction of the valve, can be constantly loaded with pressure of the brake-pressure source (6), and having a bypass channel (13,15,20) bridging the shutoff valve (3,4 or 4,24) and having a restriction (19,19′), characterized in that there is arranged in the bypass channel (13,15,20) a one-way valve (16,17 or 17′) with a fixed valve seat (16) and a moving valve-closing element (17,17′) which can be placed on the seat in a sealing manner and is arranged after it in the flow direction of the brake-pressure source (6), with the valve-closing element (17,17′), forming the restriction (19 or 19′), being guided on the housing (2) of the anti-skid valve (1) and with pressure equality on its two sides being lifted from the valve seat (16) by a force constantly acting on it.

2. Anti-skid valve according to claim 1, characterized in that the valve-closing element (17) is guided on the housing (2) with the formation of an annular gap representing the restriction (19).

3. Anti-skid valve according to claim 1, characterized in that the valve-closing element (17′) is guided or movably held on the housing (2) in an at least approximately air-tight manner and outside its face region which can be covered by the valve seat has a perforation forming the restriction (19′).

4. Anti-skid valve according to claim 1, 2 or 3, characterized in that the one-way valve (16,17) is arranged with vertical axis direction and valve seat (16) located above the valve-closing element (17) in such a way that the valve-closing element (17) can fall off from the valve seat (16) under its own weight, which represents the constantly operating force.

5. Anti-skid valve according to one of claims 1, 2 or 3, characterized in that the valve-closing element (17) is loaded by a spring (18) in the lifting direction of the valve seat (16).

6. Anti-skid valve according to claim 3, characterized in that the valve-closing element (17′) is a membrane lifting from the valve seat (16) under its inherent stress and supported on the housing (2).

## Revendications

1. Soupape anti-enrayage pour des véhicules freinés à l'air comprimé, avec une soupape d'arrêt (4, 24) eventuellement une soupape d'arrêt à membrane (3, 4), montée dans une liaison menant d'une source de pression de freinage (soupape de freinage 6) à au moins un cylindre de frein, et susceptible d'être commutée par un élément de piston ou par un élément de membrane (23 ou 3) qui, agissant dans le sens de la fermeture de la soupape, est chargé par la pression de la source de pression de freinage (6), susceptible d'être amenée de façon contrôlée et par la force d'un ressort (14), et, d'autre part, en agissant dans le sens de l'ouverture de la soupape, est chargé en permanence par la source de pression de freinage (6), et avec un canal de dérivation (bypass 13, 15, 20) en parallèle sur la soupape d'arrêt (3, 4; 4, 24) et comportant un point d'étranglement (19, 19′), caractérisée par le fait que dans le canal de dérivation (13, 15, 20) est montée une soupape à une voie (16, 17 ou 17′) comportant un siège de soupape fixe (13) et un élément de fermeture de soupape mobile (17, 17′) qui est susceptible d'être appliqué de façon étanche sur ledit siège de soupape (16) et monté en aval de ce dernier par rapport au sens d'écoulement vers la source de pression de freinage (6), l'élément de fermeture de soupape (17, 17′) formant le point d'étranglement (19, 19′), étant guidé sur le carter (2) de la soupape anti-enrayage (1), et étant décollé du siège de soupape (16) par une force à action permanente, dans le cas d'une égalité des pressions qui s'exercent sur ledit élément de fermeture de soupape (17, 17′).

2. Soupape anti-enrayage selon la revendication 1, caractérisée par le fait que l'élément de fermeture de soupape (17) est guidé sur le carter (2), avec formation d'une fente annulaire qui représente le point d'étranglement (19).

3. Soupape anti-enrayage selon la revendication 1, caractérisée par le fait que l'élément de fermeture de soupape (17′) est guidé sur le carter (2) ou y est monté de façon mobile, de façon au moins approximativement étanche à l'air, et qu'il présente, en dehors de la zone de la surface susceptible d'être recouverte par le siège de soupape, une ouverture qui forme le point d'étranglement (19′).

4. Soupape anti-enrayage selon la revendication 1, 2 ou 3, caractérisée par le fait que la soupape à une voie (16, 17) est disposée, de manière que le siège de soupape (16), en position axiale verticale, sont disposé au dessus de l'élément de fermeture de soupape (17), la réalisation étant telle que ce dernier peut se dégager du siège de soupape, sous l'effet de son propre poids qui représente la force à action permanente.

5. Soupape anti-enrayage selon l'une des revendications 1, 2 ou 3, caractérisée par le fait que l'élément de fermeture de soupape (17) est chargé par un ressort (18), dans le sens du décollement du siège de soupape (16).

6. Soupape anti-enrayage selon la revendication 3, caractérisée par le fait que l'élément de fermeture de soupape (17′) est constitué par une membrane montée dans le carter (2) et se décollant du siège de soupape (16) sous l'action de sa tension propre.
